# EUROPEAN PATENT APPLICATION

(11) **EP 4 109 881 A1**
(43) Date of publication of application: **28.12.2022**
(21) Application number: 21776505.6
(22) Date of filing: 16.02.2021
(51) Int. Cl.: H04N 5/232, H04N 5/92

(54) **INFORMATION PROCESSING DEVICE, IMAGING DEVICE, AND INFORMATION PROCESSING METHOD**

(30) Priority: 26.03.2020 JP 2020055415
(71) Applicant: Sony Group Corporation, Tokyo 108-0075 (JP)
(72) Inventor: ICHIJIMA, Daijiro, Tokyo 108-0075 (JP)
(74) Representative: D Young & Co LLP
(86) International application number: PCT/JP2021/005653
(87) International publication number: WO 2021/192736

(57) **Abstract**

An information processing device, an image-capturing device, and an information processing method that use information in which content-related history information regarding content shot by the image-capturing device is associated with product attribute information indicating an attribute of a product for which the image-capturing device is used are provided.

The present technology provides an information processing device that generates utilization information indicating a utilization status of an image-capturing device by a user in accordance with an attribute of a product, on the basis of association information in which content-related history information, which is history information indicating a history related to an image-capturing device and is related to content shot by the image-capturing device for production of a product, and product attribute information indicating an attribute of the product are associated.

## Description

### TECHNICAL FIELD

The present technology relates to an information processing device, an image-capturing device, and an information processing method.

### BACKGROUND ART

Conventionally, a technology of clarifying a way of an image-capturing device is used by analyzing information regarding the way of the image-capturing device is used has been used.

For example, Patent Document 1 discloses "an image-capturing device including: an input unit that inputs information about a way an instrument is used; and a comparison unit that compares the information about the way the instrument is used with information about specifications of the instrument".

### CITATION LIST

### PATENT DOCUMENT

Patent Document 1: Japanese Patent Application Laid-Open No. 2017-102849

### SUMMARY OF THE INVENTION

### PROBLEMS TO BE SOLVED BY THE INVENTION

However, in order to more clarify the way the image-capturing device is used, it is required to use information in which content-related history information regarding content shot by the image-capturing device is associated with product attribute information indicating an attribute of a product for which the image-capturing device is used.

Therefore, a main object of the present technology is to provide an information processing device, an image-capturing device, and an information processing method that use information in which the content-related history information and the product attribute information are associated with each other.

### SOLUTIONS TO PROBLEMS

The present technology provides an information processing device that generates utilization information indicating a utilization status of an image-capturing device by a user in accordance with an attribute of a product, on the basis of association information in which content-related history information, which is history information indicating a history related to an image-capturing device and is related to content shot by the image-capturing device for production of a product, and product attribute information indicating an attribute of the product are associated.

The history information may include operation information regarding a user's operation on the image-capturing device.

The history information may include sensor information obtained by a sensor.

The sensor information may include environment information regarding an environment around the image-capturing device.

The sensor information may include image information obtained by a solid-state imaging element included in the image-capturing device.

The sensor information may include location information indicating a location where the image-capturing device exists.

The product attribute information may include provision form information indicating a form of provision of the product.

The product attribute information may include program information indicating a type of a program that is the product.

The utilization information may include statistical information of the association information based on an attribute of the product.

The information processing device may generate the association information.

The product attribute information may be generated on the basis of the history information.

A type of the product attribute information may be associated with a type of the history information used to generate the product attribute information.

The utilization information may be generated by analyzing a plurality of pieces of the association information generated for each of a plurality of pieces of the content.

The plurality of pieces of content may be shot by a plurality of the image-capturing devices.

The utilization information may be generated for every hierarchy of an attribute of the product.

The content-related history information may include specific operation-related information regarding a specific operation on the image-capturing device by the user.

The content-related history information may be information selected from the history information on the basis of time information.

The information processing device may generate setting update information used for setting of the image-capturing device on the basis of the utilization information.

Furthermore, the present technology provides an image-capturing device that generates association information in which content-related history information, which is history information indicating a history of an image-capturing device and is related to content captured by the image-capturing device for production of a product, and product attribute information indicating an attribute of the product are associated with each other.

Furthermore, the present technology provides an information processing method in which utilization information indicating a utilization status of an image-capturing device by a user in accordance with an attribute of a product is generated on the basis of association information in which content-related history information, which is history information indicating a history of an image-capturing device and is related to content captured by the image-capturing device for production of the product, and product attribute information indicating an attribute of the product are associated with each other.

### BRIEF DESCRIPTION OF DRAWINGS

Fig. 1 is a block diagram illustrating a configuration of an information processing device 10 according to an embodiment of the present technology.
Fig. 2 is a database illustrating an example of association information according to an embodiment of the present technology.
Fig. 3 is an explanatory diagram illustrating an example of utilization information according to an embodiment of the present technology.
Fig. 4 is a block diagram illustrating a configuration of the information processing device 10 according to an embodiment of the present technology.
Fig. 5 is a flowchart illustrating an example of processing of an association information generation unit 5 according to an embodiment of the present technology.
Fig. 6 is a block diagram illustrating a configuration of the information processing device 10 according to an embodiment of the present technology.
Fig. 7 is a flowchart illustrating an example of processing of an attribute information generation unit 6 according to an embodiment of the present technology.
Fig. 8 is an explanatory diagram explaining association between a type of product attribute information and a type of history information according to an embodiment of the present technology.
Fig. 9 is a database illustrating an example of utilization information according to an embodiment of the present technology.
Fig. 10 is a block diagram illustrating a configuration of an information processing system 100 according to an embodiment of the present technology.
Fig. 11 is a conceptual diagram for explaining specific operation-related information according to an embodiment of the present technology.
Fig. 12 is a block diagram illustrating a configuration of the information processing device 10 according to an embodiment of the present technology.
Fig. 13 is a block diagram illustrating a configuration of an image-capturing device 20 according to an embodiment of the present technology.
Fig. 14 is a flowchart illustrating an example of processing of an information processing method according to the present embodiment.

### MODE FOR CARRYING OUT THE INVENTION

Hereinafter, preferred embodiments for carrying out the present technology will be described. The embodiments described below illustrate examples of a representative embodiment of the present technology, and this does not cause the scope of the present technology to be narrowly interpreted. Furthermore, each of the drawings is a schematic view, and is not necessarily strictly illustrated.

The present technology will be described in the following order.
1. First Embodiment of Present Technology (Example 1 of Information Processing Device)
   (1) Outline of Present Embodiment
   (2) History Information
   (3) Product Attribute Information
   (4) Association Information
   (5) Utilization Information
2. Second Embodiment of Present Technology (Example 2 of Information Processing Device)
3. Third Embodiment of Present Technology (Example 3 of Information Processing Device)
4. Fourth Embodiment of Present Technology (Example 4 of Information Processing Device)
5. Fifth Embodiment of Present Technology (Example 5 of Information Processing Device)
6. Sixth Embodiment of Present Technology (Example 6 of Information Processing Device)
7. Seventh Embodiment of Present Technology (Example 7 of Information Processing Device)
8. Eighth Embodiment of Present Technology (Image-Capturing Device)
9. Ninth Embodiment of Present Technology (Information Processing Method)

### [1. First Embodiment of Present Technology (Example 1 of Information Processing Device)]

### [(1) Outline of Present Embodiment]

The image-capturing device used in the present technology is, for example, an image-capturing device used for production of a product such as television broadcasting and a magazine.

The information processing device according to an embodiment of the present technology can generate utilization information indicating a utilization status of an image-capturing device by a user in accordance with an attribute of a product for which the image-capturing device is used. This makes it clear the way the image-capturing device is used in accordance with the attribute of the product. As a result, for example, it becomes possible to utilize analysis results for development of a next product, improve convenience of an image-capturing device, and the like.

The above effect is similar in other embodiments described later. Therefore, in other embodiments described later, another description will be omitted.

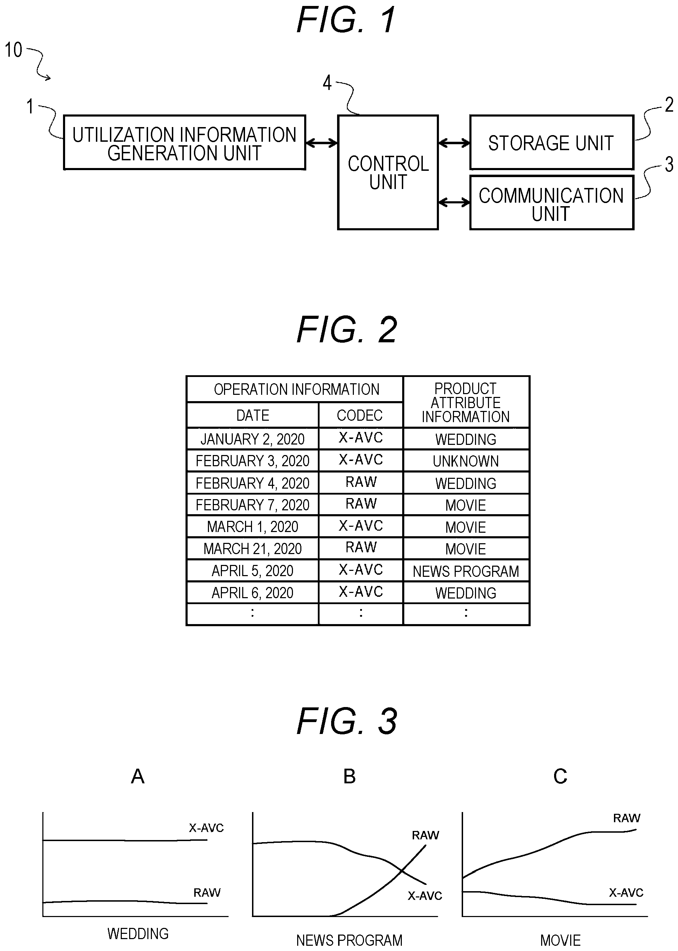

The information processing device according to an embodiment of the present technology will be described with reference to Fig. 1. Fig. 1 is a block diagram illustrating the configuration of the information processing device 10 according to an embodiment of the present technology.

As illustrated in Fig. 1, the information processing device 10 can include, for example, a utilization information generation unit 1, a storage unit 2, a communication unit 3, and a control unit 4. Although not illustrated, each of the configuration elements is connected with one another by, for example, a bus as a data transmission path.

The utilization information generation unit 1 generates utilization information indicating the utilization status of the image-capturing device by the user. Furthermore, the utilization information generation unit 1 generates utilization information of an image-capturing device in accordance with an attribute of the product on the basis of association information in which content-related history information regarding content shot by the image-capturing device for production of a product, and product attribute information indicating an attribute of the product are associated. The utilization information generation unit 1 can be implemented by using, for example, a program, a central processing unit (CPU), and the like.

Note that the program for implementing the utilization information generation unit 1 may be stored in another computer device or computer system other than the information processing device 10. In this case, the information processing device 10 can use a cloud service that provides a function of this program. Examples of this cloud service include software as a service (SaaS), infrastructure as a service (IaaS), and platform as a service (PaaS).

Furthermore, this program can be stored using various types of non-transitory computer readable medium and supplied to the computer. The non-transitory computer readable media include various types of tangible storage medium. Examples of the non-transitory computer readable medium include a magnetic recording medium (for example, a flexible disk, a magnetic tape, or a hard disk drive), a magneto-optical recording medium (for example, a magneto-optical disk), a compact disc read only memory (CD-ROM), a CD-R, a CD-R/W, and a semiconductor memory (for example, a mask ROM, a programmable ROM (PROM), an erasable PROM (EPROM), a flash ROM, or a random access memory (RAM)). Furthermore, the above-described program may be supplied to the computer by various types of transitory computer readable medium. Examples of the transitory computer readable media include electrical signals, optical signals, and electromagnetic waves. The transitory computer readable medium can supply the above-described program to the computer via a wired communication path such as an electric wire and an optical fiber, or a wireless communication path.

The content-related history information is an example of history information indicating a history regarding the image-capturing device. Although a detailed description will be given later, the history information includes operation information regarding a user's operation on the image-capturing device, setting information regarding setting of the image-capturing device, and sensor information obtained by a sensor.

A product is a deliverable created by shooting by the image-capturing device. Examples of the product include a movie, a television program, and a teaching material.

The content is image-capturing data captured by the image-capturing device for producing the product. The content may be included in the product. For example, one product may include one piece of content, or one product may include a plurality of pieces of content. Specifically, image-capturing data captured from when the power switch of the image-capturing device is turned on to when the power switch is turned off may be one piece of content. Alternatively, image-capturing data captured from when the recording switch of the image-capturing device is turned on to when the recording switch is turned off may be one piece of content. Alternatively, image-capturing data captured from when the recording switch of the image-capturing device is turned on to when the recording switch is turned off may be divided into a plurality of pieces, and one piece of the divided image-capturing data may be one piece of content.

Note that the product includes those obtained by editing image-capturing data captured by the image-capturing device. Therefore, the content can be deleted by, for example, editing.

The product attribute information indicates an attribute of the product. The attribute of the product is included in the application of the image-capturing device. The product attribute information will be described in detail later.

The association information is information in which the content-related history information and the product attribute information are associated with each other. This association allows the utilization information generation unit 1 to analyze the history information in detail.

The utilization information indicates a utilization status of the image-capturing device by the user in accordance with the attribute of the product. Generation of the utilization status makes it clear the way the image-capturing device is used in accordance with the attribute of the product.

The storage unit 2 stores control data such as a program, calculation parameters, and the like used by the utilization information generation unit 1. Information such as the history information can be stored in the storage unit 2 as a database. The storage unit 2 can be implemented by using, for example, a random access memory (RAM), a hard disk drive (HDD), a solid state drive (SSD), or the like.

Using a communication technology such as Wi-Fi, Bluetooth (registered trademark), or long term evolution (LTE), for example, the communication unit 3 communicates history information or the like via an information communication network or the like, for example. Note that the information processing device 10 may obtain information via, for example, a recording medium, a communication cable, or the like without including the communication unit 3.

The control unit 4 controls processing of configuration elements such as the utilization information generation unit 1. The control unit 4 can be implemented by using, for example, a program, a CPU, and the like.

### [(2) History information]

As described above, the history information indicates a history regarding the image-capturing device.

The history information may include operation information regarding a user's operation on the image-capturing device, for example. Examples of the operation include opening and closing of various lids, operation of various switches (for example, a mechanical shutter, a power switch, a release switch, a mode setting switch, and the like), operation of a touchscreen, and use of a finder.

This allows the information processing device 10 to obtain information regarding how the image-capturing device has been operated by the user, for example. As a result, the way the image-capturing device is used becomes clearer.

Furthermore, the operation information may include information regarding a function of the image-capturing device selected by the user, for example. Examples of the information regarding the function include a codec used for image capturing, a function currently assigned to an assignable button, and a function assigned in the past.

Alternatively, the operation information may include information regarding connection to the information communication network. The operation information may include, for example, the number of times of connection to the information communication network. The number of times of connection may be counted for each type such as Wi-Fi, WiredLAN, and Modem.

Alternatively, the operation information may include connected device information regarding a device connected to the image-capturing device, for example. Examples of the connected device information include information regarding a recording medium, a battery, a lens, and the like attached to the image-capturing device.

Alternatively, the operation information may include information regarding the date on which the image-capturing device is operated. The operation information may include information regarding an activation time of the image-capturing device.

The history information may include, for example, setting information regarding setting of the image-capturing device in addition to the operation information. Examples of the setting information include setting parameters set in the image-capturing device. Examples of the setting parameters include ISO, exposure, focus, diaphragm, and white balance. The setting parameter may include a default setting parameter set even without a user's operation.

This allows the information processing device 10 to obtain information regarding how the image-capturing device has been set, for example. As a result, the way the image-capturing device is used becomes clearer.

Alternatively, the history information may include sensor information obtained by the sensor.

This allows the information processing device 10 to obtain information regarding what situation the image-capturing device has been utilized in, for example. Furthermore, the information processing device 10 can obtain information regarding what information the image-capturing device has obtained, for example. As a result, the way the image-capturing device is used becomes clearer.

The sensor information may include environment information regarding the environment around the image-capturing device. The environment information may include information regarding, for example, temperature, humidity, aroma, time, brightness, audio, acceleration, angular velocity, or the like. For example, it is possible to specify whether or not the image-capturing device is fixed to a tripod or the like on the basis of information regarding angular velocity.

This allows the information processing device 10 to obtain information regarding what environment the image-capturing device has been utilized in, for example. As a result, the way the image-capturing device is used becomes clearer.

Alternatively, the sensor information may include image information obtained by a solid-state imaging element included in the image-capturing device.

This allows the information processing device 10 to obtain information regarding the content shot by the image-capturing device, for example. As a result, the way the image-capturing device is used becomes clearer.

Alternatively, the sensor information may include location information indicating the location where the image-capturing device exists. The location information is obtained by using, for example, a global positioning system (GPS) and the like.

This allows the information processing device 10 to obtain information regarding the location where the image-capturing device exists, for example. As a result, the way the image-capturing device is used becomes clearer.

Meanwhile, as described above, the content-related history information regarding the content is an example of the history information. On the other hand, the content-unrelated history information that is not related to the content is also an example of the history information. This will be described using the following specific example.

For example, it is assumed that there is a three-day shooting schedule, and content A for a news program has been shot on the first day, content B for an entertainment program has been shot on the second day, content C for a movie has been shot in the morning of the third day, and content D for the news program has been shot in the afternoon of the third day.

In this example, the history information indicates all the histories regarding the image-capturing device used in the three-day shooting schedule. The content-related history information is history information regarding each of the pieces of content A to D.

The content-unrelated history information can be history information regarding other content when there are a plurality of pieces of content-related history information in this manner. For example, the content-related history information for the content A can be history information regarding the content A (history information corresponding to shooting on the first day), and the content-unrelated history information for the content A can be history information regarding the pieces of content B, C, and D (history information corresponding to shooting on the second day and the third day).

Alternatively, the content-unrelated history information may be history information regarding the function of the image-capturing device that has not been selected by the user in this three-day shooting schedule. For example, even for history information regarding a function set, a connected device, and the like before shooting of the content, in a case where the setting is released at the time of content shooting or the device is removed, the history information can be content-unrelated history information. Furthermore, history information before a predetermined time from when the recording switch of the image-capturing device is turned on can also be the content-unrelated history information.

The history information may include content-related history information regarding one piece of content, may include a plurality of pieces of content-related history information regarding one piece of content, or may include a plurality of pieces of content-related history information regarding a plurality of pieces of content. Furthermore, the history information may include content-unrelated history information.

The history information may be recorded inside the image-capturing device 20 or may be transmitted to the information processing device 10 without being recorded inside the image-capturing device 20.

In the history information, a flag may be set for determining whether the history information is content-related history information or the history information is content-unrelated history information. The history information may be recorded or transmitted while the flag is being set in real time. Note that the history information may be recorded or transmitted without the flag being set.

### [(3) Product Attribute Information]

As described above, the product attribute information indicates the attribute of the product.

The product attribute information may include provision form information indicating the form of provision of the product. Examples of the form of provision include television broadcasting, television recording, Internet distribution, and movie showing.

This allows the information processing device 10 to obtain information regarding a form of provision of a product produced using the image-capturing device to the public, for example. Since the form of provision varies depending on the way the image-capturing device is used, the way the image-capturing device is used becomes clearer.

Alternatively, the product attribute information may include broadcast form information indicating a broadcast form of the product. Examples of the broadcast form include live broadcast and recorded broadcast.

This allows the information processing device 10 to obtain information regarding a broadcast form of the product, for example. Since the broadcast form varies depending on the way the image-capturing device is used, the way the image-capturing device is used becomes clearer.

The provision form information and the broadcast form information indicate how the product is transmitted to the public. On the other hand, the product attribute information may include information indicating what the product is.

For example, the product attribute information may include program information indicating the type of the program that is a product. Examples of types of program include a news program, an information program, a sports program, a cultural program, an entertainment program, a drama, and a movie program.

This allows the information processing device 10 to obtain information regarding the type of a program that is a product, for example. Since the type of program varies depending on the way the image-capturing device is used, the way the image-capturing device is used becomes clearer.

In addition, the product attribute information may include event information indicating the type of an event, for example. Examples of the type of event include wedding, a class, an assembly, and sports. Here, the types of sports such as soccer, baseball, and basketball are also included in the type of event.

In a case where the product is a "live soccer broadcasting program", examples of the product attribute information include information indicating television broadcasting, live broadcasting, an entertainment program, a sports program, sports, and soccer. As will be described in detail later, each pieces of information indicating all attributes having different hierarchies in this manner are included in the product attribute information.

### [(4) Association Information]

As described above, the association information is information in which the history information and the product attribute information are associated with each other. The association information will be described with reference to Fig. 2. Fig. 2 is a database illustrating an example of the association information according to the present embodiment.

As illustrated in Fig. 2, the information regarding the date on which the image-capturing device included in the operation information as the history information has been utilized, the information regarding the codec included in the operation information as the history information, and the product attribute information are associated with one another. For example, the image-capturing device that is an image-capturing device has been utilized for the purpose of wedding on January 2, 2020, and has recorded video information using a codec called X-AVC.

### [(5) Utilization Information]

As described above, the utilization information indicates the utilization status of the image-capturing device by the user in accordance with the attribute of the product. The utilization information generation unit 1 generates utilization information on the basis of the association information. By using the information in which the history information and the product attribute information are associated with each other, the utilization information generation unit 1 can analyze the history information for every attribute of the product.

The utilization information can include statistical information of association information based on the attribute of the product. The statistical information includes, for example, a numerical value obtained by aggregating data and a created graph or table. Alternatively, the statistical information may include a feature of data obtained from, for example, an average value or a tendency in the graph or table.

This allows the information processing device 10 to obtain the tendency of the utilization status of the image-capturing device by the user, for example.

The utilization information may include statistical information of the association information based on the attribute of one product, or may include statistical information of the association information based on the attributes of a plurality of products. The statistical information of the association information based on the attribute of one product includes information that "many lenses manufactured by X company are used for sports", for example. The statistical information of the association information based on the attributes of the plurality of products includes information that "the lenses used in sports and wedding have relevance", for example.

Furthermore, the utilization information generation unit 1 may generate the utilization information on the basis of the association information associated with one type of content-related history information, or may generate the utilization information on the basis of the association information associated with a plurality of types of content-related history information.

Hereinafter, utilization information based on association information associated with one type of content-related history information will be described by way of example. Note that there may be other examples.

The utilization information generation unit 1 may generate the utilization information on the basis of the association information associated with the connected device information. This indicates that a high-magnification zoom lens tends to be used in the attribute "cultural program", for example.

The utilization information generation unit 1 may generate the utilization information on the basis of the association information associated with the setting information. This indicates that manual focus tends to be used in the attribute "drama", for example.

The utilization information generation unit 1 may generate the utilization information on the basis of the association information associated with the environment information. This indicates that the image-capturing device tends to be fixed to the tripod in the attribute "sports broadcasting", for example.

The utilization information generation unit 1 may generate the utilization information on the basis of the association information associated with the image information. This indicates that a celebrity tends to be appointed as a host in the attribute "news program", for example.

The utilization information generation unit 1 may generate the utilization information on the basis of the association information associated with the location information. This indicates that the movie tends to be shot in a predetermined shooting studio in the attribute "movie", for example.

Furthermore, the utilization information generation unit 1 may generate the utilization information on the basis of the association information associated with a plurality of types of content-related history information. For example, it is indicated, regarding the image-capturing device utilized for a news program, that there is a tendency that the autofocus function is used when a lens P is attached and the manual focus function is used when a lens Q is attached.

Moreover, one of the plurality of types may be time. The utilization information generation unit 1 may generate the utilization information on the basis of the association information associated with time when the image-capturing device is used, other content-related history information, and the like.

This makes it clear the way the image-capturing device is used in accordance with the time zone. For example, it is indicated that an image-capturing device used for sports broadcasting has a tendency in the value of ISO in the daytime and the value of ISO in the nighttime.

Alternatively, the utilization information generation unit 1 may generate the utilization information on the basis of the association information arranged in time series in accordance with the time at which the image-capturing device is used. This will be described with reference to Fig. 3. Fig. 3 is an explanatory diagram illustrating an example of utilization information according to the present embodiment. Fig. 3 is an example of utilization information generated by the utilization information generation unit 1 on the basis of the association information illustrated in Fig. 2.

Fig. 3 illustrates a graph for every attribute of the product. In each graph, the horizontal axis represents time, and the vertical axis represents the number of times of recording. One horizontal row in Fig. 2 is counted as the number of times of recording in Fig. 3 is one.

As illustrated in Fig. 3, operation information that is history information is analyzed for every attribute of the product. For example, in the attribute "wedding" illustrated in Fig. 3A, the number of times the codec "X-AVC" is used is larger than the number of times the codec "RAW" is used. In the attribute "news program" illustrated in Fig. 3B, as time passes, the number of times the codec "X-AVC" is used decreases, and the number of times the codec "RAW" is used increases. In the attribute "movie" illustrated in Fig. 3C, as time passes, the number of times the codec "RAW" is used increases, the number of times the codec "X-AVC" is used decreases, and thereafter, these are hardly changed.

The utilization information may include information obtained from the statistical information in addition to the statistical information. The utilization information can include information such as "In the news program, the number of times RAW is used is increasing" obtained from the graph as illustrated in Fig. 3, for example. The utilization information generation unit 1 may generate such information.

Conventionally, since the attribute of the product is unknown, it is difficult to sufficiently analyze how the image-capturing device is used. For example, it is difficult to estimate the reason for the increase or decrease in the number of times the codec is used.

According to the present technology, generation of the utilization information makes it clear the way the image-capturing device is used in accordance with the attribute of the product. This enables, for example, the utilization information to be utilized for market analysis related to the image-capturing device. Alternatively, the utilization information can be utilized for development of a next product of the image-capturing device.

Hereinafter, utilization of utilization information in market analysis, development of next products, and the like will be described by way of example.

Utilization information may be used to specify a range to be focused on in development of the next product, update of firmware, and the like. For example, a function, a setting parameter, and a connected device that are frequently used can be focused on in development of the next product, update of firmware, and the like.

As a specific example, in a field (attribute of product) where the market size is expanding, in a case where it can be specified from the utilization information that a zoom lens having a focal length of 18 to 55 mm is highly frequently used, the developer can focus on development of the zoom lens that is the successor. Alternatively, in a field where the market size is expanding, in a case where it can be specified from the utilization information that the autofocus function is highly frequently used, development costs related to improvement of the autofocus function can be input.

On the other hand, a function or the like that is less frequently used can be deleted in development of the next product, update of firmware, and the like. This makes it possible to improve usability, reduce development costs, and the like.

Alternatively, the utilization information may be used to specify a range to be focused on in advertisement activities or the like. For example, in a case where a function is important in a future product strategy road map but the function is less frequently used, advertisement activities related to the function can be actively performed.

As a specific example, in a case where a network function is added for a broadcasting station but the function is less frequently used, advertisement activities related to the network function can be actively performed for the broadcasting station.

Alternatively, the utilization information may be used to evaluate the product at the time of product shipment or the like. For example, the evaluation criteria can be formulated in accordance with the frequency of use.

As a specific example, evaluation under environment conditions that are frequent in the market can be regarded important in particular.

Alternatively, the utilization information may be used for specification and evaluation of a member to be used in development of the next product and the like. For example, specification of members, formulation of evaluation criteria, and the like can be performed in accordance with the utilization status by the user obtained from the temperature, humidity, acceleration, the cumulative number of times the button is pressed, and the like included in the sensor information.

As a specific example, a member that can withstand the cumulative number of times the recording start button is pressed can be selected.

### [2. Second Embodiment of Present Technology (Example 2 of Information Processing Device)]

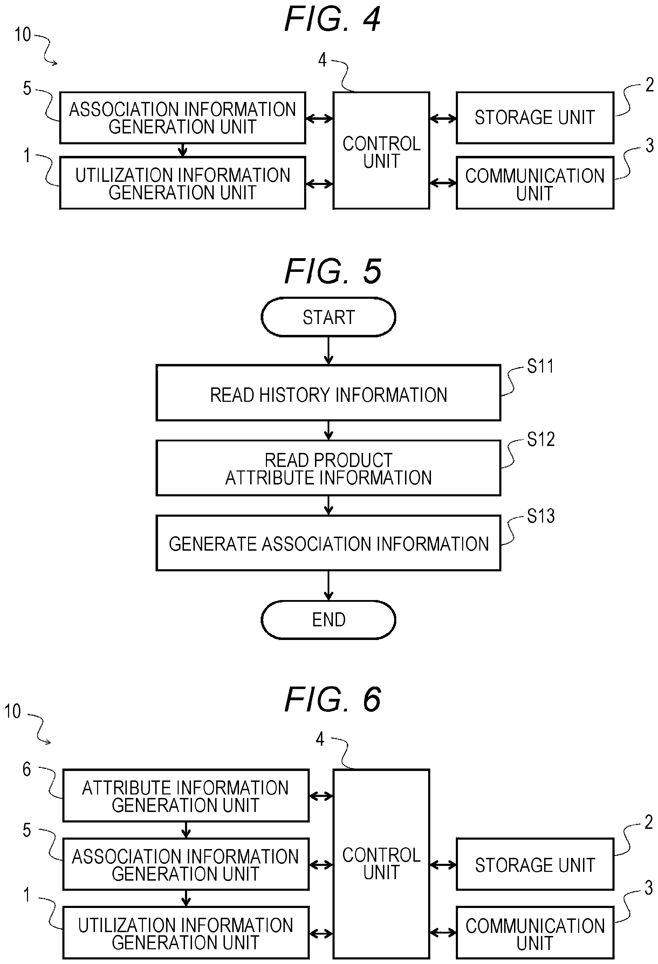

The information processing device 10 may further include an association information generation unit that generates association information. This will be described with reference to Fig. 4. Fig. 4 is a block diagram illustrating the configuration of the information processing device 10 according to an embodiment of the present technology. Note that constituent elements similar to those in the first embodiment are given the same reference signs, and detailed description will be omitted.

As illustrated in Fig. 4, the information processing device 10 can further include the association information generation unit 5. The association information generation unit 5 can be implemented by using, for example, a program, a CPU, and the like.

The association information generation unit 5 and the utilization information generation unit 1 are connected to each other. The association information generated by the association information generation unit 5 is transmitted to the utilization information generation unit 1.

The processing of the association information generation unit 5 will be described with reference to Fig. 5. Fig. 5 is a flowchart illustrating an example of processing of the association information generation unit 5 according to an embodiment of the present technology.

As illustrated in Fig. 5, the association information generation unit 5 first reads history information (step S11). Next, the association information generation unit 5 reads product attribute information (step S12). Finally, the association information generation unit 5 generates association information by associating the history information with the product attribute information (step S13).

According to the present embodiment, the information processing device 10 can generate association information by itself, for example, without obtaining the association information from another information processing device.

Note that the information processing device 10 may be, for example, an image-capturing device. When the information processing device 10 is an image-capturing device, the information processing device 10 needs not include the communication unit 3. The same applies to third and seventh embodiments described later.

### [3. Third Embodiment of Present Technology (Example 3 of Information Processing Device)]

The information processing device 10 may include an attribute information generation unit that generates product attribute information on the basis of history information. This will be described with reference to Fig. 6. Fig. 6 is a block diagram illustrating the configuration of the information processing device 10 according to an embodiment of the present technology.

The information processing device 10 may be an image-capturing device. Note that constituent elements similar to those in the first and second embodiments are given the same reference signs, and detailed description will be omitted.

As illustrated in Fig. 6, the information processing device 10 can further include the attribute information generation unit 6. The attribute information generation unit 6 can be implemented by using, for example, a program, a CPU, and the like.

The attribute information generation unit 6 and the association information generation unit 5 are connected with each other. The product attribute information generated by the attribute information generation unit 6 is transmitted to the association information generation unit 5.

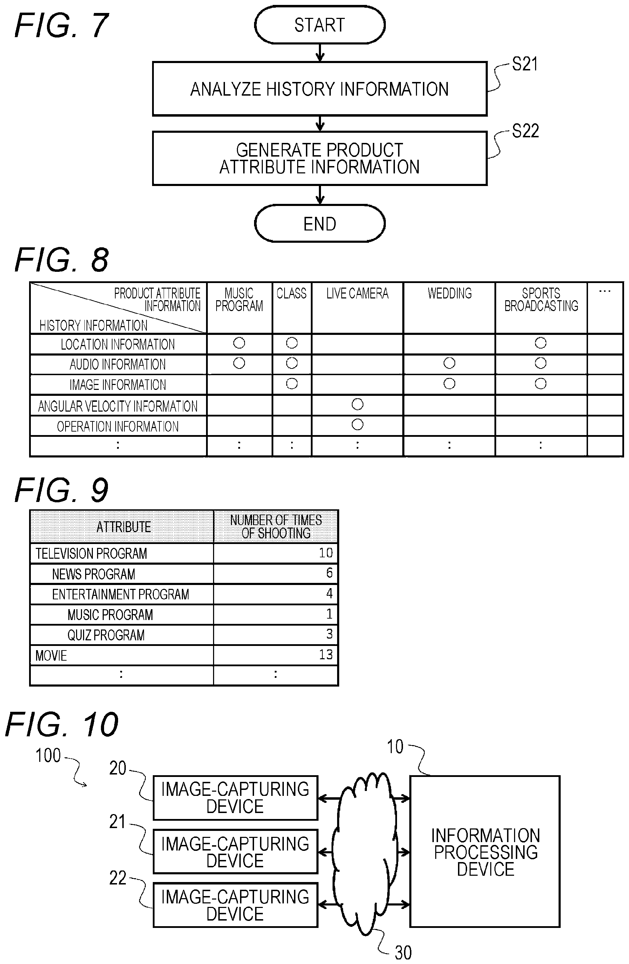

The processing of the attribute information generation unit 6 will be described with reference to Fig. 7. Fig. 7 is a flowchart illustrating an example of processing of the attribute information generation unit 6 according to an embodiment of the present technology.

As illustrated in Fig. 7, the attribute information generation unit 6 first analyzes history information (step S21). For example, when setting information is included in the history information, the attribute information generation unit 6 analyzes the setting parameters included in the setting information. For example, when sensor information is included in the history information, the attribute information generation unit 6 analyzes the environment information, the image information, and the like included in the sensor information.

Next, the attribute information generation unit 6 generates product attribute information on the basis of the history information (step 22). The history information may be one piece or a plurality of pieces of history information, but the accuracy of the product attribute information to be generated becomes higher in the plurality of pieces of history information.

The information processing device 10 according to the present embodiment can obtain the product attribute information without causing the user to input the product attribute information. This makes it possible to, for example, reduce the burden on the user, improve the reliability of analysis results, and the like.

Hereinafter, specific examples of generation of the product attribute information will be listed. The following is an example, and there may be other examples.

For example, when it can be analyzed that a streaming function is used on the basis of operation information (step S21), the attribute information generation unit 6 specifies that the form of provision is Internet distribution, and generates product attribute information corresponding to this (step S22).

For example, when it can be analyzed that the image-capturing device that is an image-capturing device is fixed on the basis of angular velocity information included in the sensor information (step S21) and/or when it can be analyzed that the image-capturing device has not been operated for a long time on the basis of the operation information (step S21), the attribute information generation unit 6 specifies that the image-capturing device is a live camera. Then, the utilization information generation unit 1 specifies that the form of provision is Internet distribution, specifies that the broadcast form is live broadcast, specifies that the type of program is news program, and generates the product attribute information corresponding to these (step S22).

For example, when it can be analyzed that the image-capturing device does not include a recording medium on the basis of the operation information (step S21), the attribute information generation unit 6 specifies that the broadcast form is live broadcast, and generates the product attribute information corresponding to this (step S22). Alternatively, when it can be analyzed that the image-capturing device includes a recording medium on the basis of the operation information (step S21), the attribute information generation unit 6 specifies that the broadcast form is recorded broadcast, and generates the product attribute information corresponding to this (step S22).

For example, when it can be analyzed that the image-capturing device is placed in a television broadcasting station from the location information on the basis of location information and audio information included in the sensor information (step S21) and/or when it can be analyzed that music is included in the audio information (step S21), the attribute information generation unit 6 specifies that the type of the program is music program and generates the product attribute information corresponding to this (step S22).

For example, when it can be analyzed that the image-capturing device is placed in a concert hall from the location information on the basis of location information and audio information included in the sensor information (step S21) and/or when it can be analyzed that music is included in the audio information (step S21), the attribute information generation unit 6 specifies that the type of event is music concert and generates the product attribute information corresponding to this (step S22).

For example, when it can be analyzed that music and wedding songs often used for wedding ceremonies are included from the audio information on the basis of audio information and image information included in the sensor information (step S21), and/or when it can be analyzed that an image of a woman wearing white clothes is included in the image information (step S21), the attribute information generation unit 6 specifies that the type of event is wedding, and generates the product attribute information corresponding to this (step S22).

For example, when it can be analyzed that the image-capturing device is placed at a school from the location information on the basis of location information, audio information, and image information included in the sensor information (step S21), and/or when it can be analyzed that the audio information includes audio of a teacher (step S21), and/or when it can be analyzed that the image information includes an image of a blackboard (step S21), the attribute information generation unit 6 specifies that the type of event is class, and generates the product attribute information corresponding to this (step S22).

For example, when it can be analyzed that the image-capturing device is placed in a soccer stadium from the location information on the basis of location information, audio information, and image information included in the sensor information (step S21), and/or when it can be analyzed that the image information includes the images of the turf and a soccer ball (step S21), and/or when it can be analyzed that the audio information includes cheers of audience (step S21), the utilization information generation unit 1 specifies that the type of event is soccer, and generates the product attribute information corresponding to this (step S22).

Furthermore, the utilization information generation unit 1 may generate product attribute information on the basis of information disclosed on the Internet or the like. For example, the utilization information generation unit 1 can generate product attribute information by collating the television program guide information with the history information. More specifically, when the information regarding the broadcast date and time included in the television program guide information matches the information regarding the date and time when the image-capturing device is utilized included in the operation information, and the information regarding the broadcast place (for example, soccer stadium) included in the television program guide information matches the location information (for example, soccer stadium) included in the sensor information (step S21), the utilization information generation unit 1 specifies that the broadcast form is live broadcast, specifies that the type of event is soccer, and generates the product attribute information corresponding to these (step S22).

Note that the utilization information generation unit 1 may perform machine learning by using training data having history information as input information and product attribute information as output information.

The type of history information used to generate product attribute information varies depending on the type of product attribute information. Therefore, the type of product attribute information and the type of history information used to generate the product attribute information may be associated with each other. This will be described with reference to Fig. 8. Fig. 8 is an explanatory diagram illustrating association between the type of product attribute information and the type of history information according to the present embodiment.

As illustrated in Fig. 8, the type of product attribute information and the type of history information are associated with each other. For example, the type of history information used to generate product attribute information regarding "music program" is, for example, location information, audio information, and the like. Similarly, the type of history information used to generate product attribute information regarding "class", for example, is location information, audio information, and image information.

The explanatory diagram illustrated in Fig. 8 can be stored in the storage unit 2 or the like as a database, for example.

According to the present embodiment, the association between the product attribute information and the history information becomes clear. As a result, the accuracy of the utilization information to be generated is improved.

### [4. Fourth Embodiment of Present Technology (Example 4 of Information Processing Device)]

The utilization information may be generated for every hierarchy of the attribute of the product. For example, the utilization information generation unit 1 can generate the utilization information for every hierarchy of the attribute of the product.

The hierarchy of the attribute of the product will be described with reference to Fig. 9. Fig. 9 is a database illustrating an example of utilization information according to the present embodiment. As illustrated in Fig. 9, the utilization information is generated for every hierarchy of the attribute of the product. Note that each of the plurality of attributes illustrated in Fig. 9 is product attribute information.

For example, the attribute "television program" includes attributes "news program", "information program", and "entertainment program" in its lower hierarchy. Furthermore, the "entertainment program" includes attributes "music program" and "quiz program" in its lower hierarchy. In this manner, the utilization information has a hierarchical structure.

The number of times the image-capturing device has been used (the number of times of shooting) in the attribute "television program" is 10 times. A breakdown of this 10 times is illustrated for every attribute of its lower hierarchy. That is, among this 10 times, the number of times of shooting in the attribute "news program" is 6 times, and the number of times of shooting in the attribute "entertainment program" is 4 times. Moreover, a breakdown of this 4 times is presented for every attribute "music program" and "quiz program" in its lower hierarchy.

According to the present embodiment, due to generation of the utilization information for every hierarchy of the attribute of the product in this manner, the attribute of the product that is the purpose of the image-capturing device becomes clearer, and thus the way the image-capturing device is used becomes clearer.

### [5. Fifth Embodiment of Present Technology (Example 5 of Information Processing Device)]

In the first embodiment, utilization information generated by analyzing one piece of association information has been described.

On the other hand, the utilization information may be generated by analyzing a plurality of pieces of association information generated for each of a plurality of pieces of content. That is, the association information generation unit 5 generates association information for each of the plurality of pieces of content. Therefore, a plurality of pieces of association information is generated. The utilization information generation unit 1 generates utilization information by analyzing the plurality of pieces of association information.

This allows the information processing device 10 to comprehensively analyze a plurality of types of utilization information, for example.

For example, it can be seen that a high-magnification zoom lens tends to be used in the attribute "cultural program", but a wide-angle lens tends to be used in the attribute "movie".

Alternatively, for example, it is indicated that manual focus tends to be used in the attribute "drama", but autofocus tends to be used in the attribute "news program".

Furthermore, according to the present embodiment, since the utilization information is generated on the basis of the plurality of pieces of association information, the accuracy of the utilization information is improved as compared with the case where one piece of association information is used.

The plurality of pieces of content may be shot by one image-capturing device. Alternatively, the plurality of pieces of content may be shot by a plurality of image-capturing devices. This will be described with reference to Fig. 10. Fig. 10 is a block diagram illustrating the configuration of an information processing system 100 according to an embodiment of the present technology. Note that constituent elements similar to those in the first and second embodiments are given the same reference signs, and detailed description will be omitted.

As illustrated in Fig. 10, the information processing system 100 according to the present embodiment may include a plurality of image-capturing devices (20, 21, 22) and the information processing device 10. Note that the number of image-capturing devices is not limited to three.

Each of the plurality of image-capturing devices (20, 21, 22) and the information processing device 10 are connected via an information communication network 30. Note that each of the plurality of image-capturing devices (20, 21, 22) and the information processing device 10 needs not be connected via the information communication network 30.

Each of the plurality of image-capturing devices (20, 21, 22) shoots content for production of the product. Therefore, a plurality of pieces of content is generated. Note that each of the plurality of image-capturing devices (20, 21, 22) may shoot one same content.

The association information generation unit 5 (not illustrated) included in the information processing device 10 generates association information for each of the plurality of pieces of content. Therefore, a plurality of pieces of association information is generated. The utilization information generation unit 1 (not illustrated) included in the information processing device 10 generates the utilization information by analyzing the plurality of pieces of association information.

This allows the information processing device 10 to analyze the utilization status regarding the content corresponding to each of the plurality of image-capturing devices. For example, it becomes possible to analyze the utilization status in accordance with the model, size, sales area, or the like of the image-capturing device.

### [6. Sixth Embodiment of Present Technology (Example 6 of Information Processing Device)]

The content-related history information may include specific operation-related information regarding a specific operation on the image-capturing device by the user.

As described above, the content-related history information is history information in which history information regarding content has been selected from among the history information. Since the content is shot by a specific operation of the user, the specific operation-related information can be said to be the content-related history information regarding the content to be shot. The specific operation-related information includes, for example, information regarding a button pressed by the user, setting information of the image-capturing device when the button is pressed, and the like.

The association information generation unit 5 generates the association information by associating the specific operation-related information, which is content-related history information, with the product attribute information.

Here, the association information generation unit 5 may associate all pieces of specific operation-related information included in the history information. Alternatively, the association information generation unit 5 may select and associate the specific operation-related information as content-related history information from among the history information. The utilization information to be generated varies depending on this range.

This improves the accuracy with which the content-related history information is selected from among the history information. Since history information not related to content is prevented from being erroneously associated, more accurate utilization information is generated.

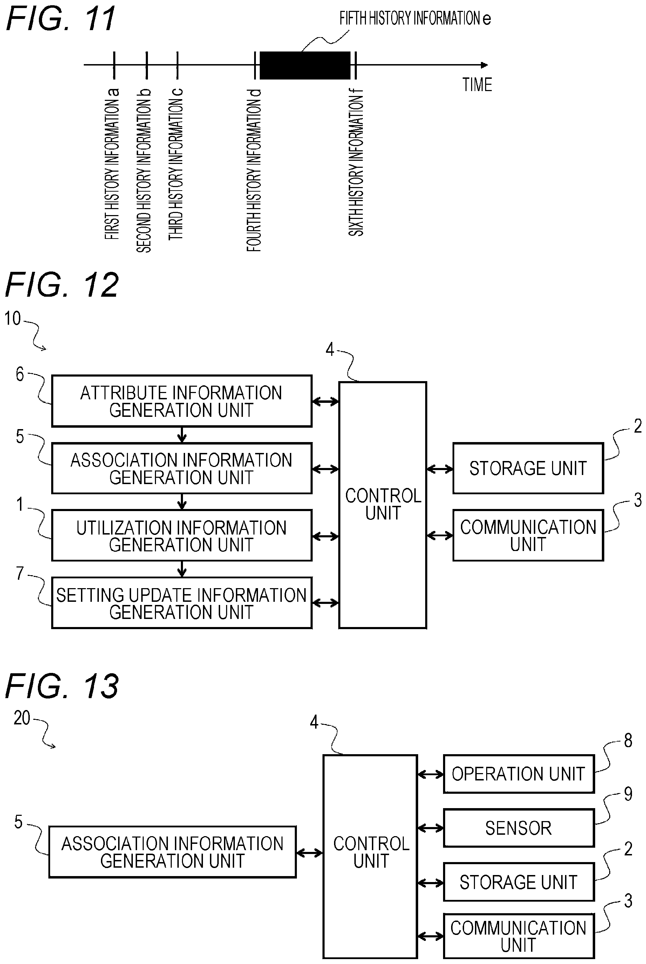

Furthermore, although the selection is not particularly limited, for example, when a plurality of specific operations by the user is performed within a short time, this plurality of operations can be estimated to be related to one another. Therefore, the content-related history information may be information selected from among the history information on the basis of time information. This will be described with reference to Fig. 11. Fig. 11 is a conceptual diagram for explaining content-related history information according to an embodiment of the present technology.

In Fig. 11, the horizontal axis represents time.
As illustrated in Fig. 11, history information is recorded as time passes.

For example, when the shutter button of the image-capturing device is pressed by the user (second history information b), the content-related history information includes setting information of the image-capturing device immediately before (first history information a), image information immediately after (third history information c), and the like. That is, the first history information a to the third history information c are information selected from the history information on the basis of the time information. In other words, the first history information a to the third history information c are specific operation-related information.

Alternatively, for example, when the recording switch of the image-capturing device is turned on (fourth history information d) and turned off (sixth history information f) by the user, the content-related history information includes image information (fifth history information e) in a period from the fourth history information d to the sixth history information f. That is, the fourth history information d to the sixth history information f are information selected from the history information on the basis of the time information. In other words, the fourth history information d to the sixth history information f are specific operation-related information.

The utilization information generation unit 1 can generate the utilization information on the basis of the association information associated with the content-related history information selected from the history information on the basis of the time information.

By being selected from the history information on the basis of the time information, the information processing device 10 can determine with higher accuracy whether the history information is related to the content or is not related to the content.

### [7. Seventh Embodiment of Present Technology (Example 7 of Information Processing Device)]

The generated utilization information can be used for setting of the image-capturing device 20. This will be described with reference to Fig. 12. Fig. 12 is a block diagram illustrating the configuration of the information processing device 10 according to an embodiment of the present technology. The information processing device 10 may be an image-capturing device. Note that constituent elements similar to those in the first and second embodiments are given the same reference signs, and detailed description will be omitted.

As illustrated in Fig. 12, the information processing device 10 can further include a setting update information generation unit 7.

The utilization information generation unit 1 and the setting update information generation unit 7 are connected. The utilization information generated by the utilization information generation unit 1 is transmitted to the setting update information generation unit 7.

The setting update information generation unit 7 can generate setting update information used for setting of the image-capturing device 20 on the basis of the utilization information. The setting update information generation unit 7 can be implemented by using, for example, a program, a CPU, and the like.

The setting update information may be a setting parameter of the image-capturing device 20 (not illustrated), for example. The setting update information generation unit 7 generates recommended setting parameters on the basis of the utilization information. For example, the setting update information generation unit 7 generates a setting parameter that is often set when the attribute of the product is "wedding".

The setting parameter may be transmitted to the image-capturing device 20 via, for example, the information communication network 30 (not illustrated) or the like. The image-capturing device 20 can update the setting by using the transmitted setting parameter. With this update, the setting parameter of the image-capturing device 20 is changed or maintained.

Conventionally, an image-capturing device is difficult to set parameters in accordance with the operation, the situation, and the like, and often requires a skilled technology. According to the present technology, the setting of the image-capturing device 20 is updated using the setting parameter recommended in accordance with the utilization status of the user. Therefore, even a user having little shooting experience can perform shooting similar to an expert.

The image-capturing device 20 may display recommended setting parameters onto a screen or the like. For example, the image-capturing device 20 may display an appropriate ISO value in a highlighted manner, or may display a recommended selection item at a location that can be easily selected by the user, such as the upper part of the screen.

The setting update information may be information regarding a function included in the image-capturing device 20, for example. The setting update information generation unit 7 generates information regarding the recommended function on the basis of the utilization information. For example, when the autofocus function tends to be frequently used in a case where the attribute of product is "wedding", the setting update information generation unit 7 generates setting update information used to set the image-capturing device 20 to autofocus.

The information regarding the function is transmitted to the image-capturing device 20 via, for example, the information communication network 30 or the like. The image-capturing device 20 can encourage the user to utilize the function recommended in accordance with the utilization status of the user by using the information regarding the function having been transmitted. Alternatively, the image-capturing device 20 can be added with a function recommended in accordance with the utilization status of the user.

Conventionally, an image-capturing device has abundant functions, but it is often difficult to sufficiently utilize the functions due to the abundance. According to the present technology, the image-capturing device 20 can encourage the user to utilize the function recommended in accordance with the utilization status of the user.

Furthermore, according to the present technology, a function lacking in the image-capturing device can be added by, for example, firmware update or the like.

The setting update information may be information regarding a device to be connected to the image-capturing device 20, for example. The setting update information generation unit 7 generates information regarding the recommended device on the basis of the utilization information. Examples of this device include a lens.

Conventionally, a wide variety of devices are connected to an image-capturing device, but it is difficult to select a device in accordance with the utilization status of the user, and a skilled technology is often required. According to the present technology, the image-capturing device 20 can encourage the user to connect the device recommended in accordance with the utilization status of the user. This makes it easy to select a device in accordance with the utilization status of the user. Furthermore, sales promotion of the recommended device is expected.

### [8. Eighth Embodiment of Present Technology (Image-Capturing Device)]

The image-capturing device 20 according to an embodiment of the present technology may generate association information. This allows the information processing device 10 according to an embodiment of the present technology to generate utilization information on the basis of the association information.

The image-capturing device 20 according to an embodiment of the present technology will be described with reference to Fig. 13. Fig. 13 is a block diagram illustrating the configuration of the image-capturing device 20 according to an embodiment of the present technology. Note that constituent elements similar to those in the first and second embodiments are given the same reference signs, and detailed description will be omitted.

As illustrated in Fig. 13, the image-capturing device 20 can include, for example, the association information generation unit 5, an operation unit 8, a sensor 9, the storage unit 2, the communication unit 3, and the control unit 4. Although not illustrated, each of the configuration elements is connected with one another by, for example, a bus as a data transmission path.

The operation unit 8 encourages the user to operate the image-capturing device 20. The operation unit 8 can be implemented by using, for example, a button, a switch, and the like.

The sensor 9 obtains sensor information. The sensor 9 can be implemented by using, for example, a thermometer, a hygrometer, a clock, a gyro sensor, a solid-state imaging element, a GPS receiver, and the like.

The storage unit 2 stores, for example, history information, association information, and the like. The storage unit 2 can be implemented by using, for example, a random access memory (RAM), a hard disk drive (HDD), a solid state drive (SSD), or the like.

The communication unit 3 performs information communication with the information processing device 10 via, for example, the information communication network 30 (not illustrated) or the like. The communication unit 3 can transmit, for example, association information to the information processing device 10.

The association information generation unit 5 generates association information. The association information generation unit 5 generates association information by associating history information obtained by the sensor 9 or the like with product attribute information generated on the basis of the history information.

According to the present technology, association information is generated inside the image-capturing device 20. Therefore, a large size of image information needs not be transmitted to the information processing device 10. As a result, it is possible to prevent compression on the bandwidth of the information communication network 30, the storage capacity of the information processing device 10, and the like.

Although not illustrated, the image-capturing device 20 may further include the attribute information generation unit 6, the utilization information generation unit 1, and the setting update information generation unit 7. Alternatively, the image-capturing device 20 may include, for example, the attribute information generation unit 6 and the like in place of the association information generation unit 5.

### [9. Ninth Embodiment of Present Technology (Information Processing Method)]

An information processing method according to an embodiment of the present technology is a method of generating utilization information indicating a utilization status of an image-capturing device by a user using a computer. Note that the information processing method according to the present embodiment can use the technology described in the above embodiments. Therefore, the technology described in the above embodiments will not be described again.

The information processing method according to the present embodiment uses content-related history information, which is history information indicating a history of an image-capturing device and is related to content captured by the image-capturing device for production of a product.

Furthermore, the information processing method according to the present embodiment uses product attribute information indicating an attribute of the product.

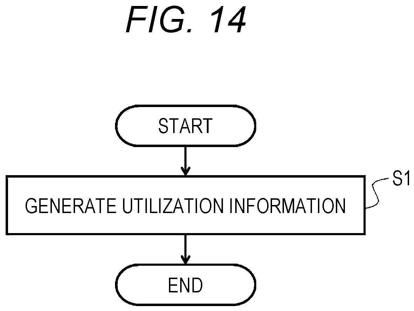

The information processing method according to the present embodiment will be described with reference to Fig. 14. Fig. 14 is a flowchart illustrating an example of the processing of the information processing method according to the present embodiment.

As illustrated in Fig. 14, the information processing method according to the present embodiment includes generating the utilization information on the basis of association information (step S1).

The association information is information associated with the content-related history information and the product attribute information.

The information processing method according to the present embodiment can be implemented by using software and hardware. Specifically, for example, the CPU included in the hardware reads a program for implementing the information processing method according to the present embodiment, whereby the information processing method according to the present embodiment can be implemented.

In addition to this, the configurations described in the above embodiments can be selected or changed as appropriate to other configurations without departing from the gist of the present technology.

Note that the effects described in the present description are merely examples and are not limited, and other effects may be provided.

Note that the present technology can also have the following configurations.
[1] An information processing device that generates utilization information indicating a utilization status of an image-capturing device by a user in accordance with an attribute of a product, on the basis of association information in which content-related history information, which is history information indicating a history related to an image-capturing device and is related to content shot by the image-capturing device for production of the product, and product attribute information indicating an attribute of the product are associated with each other.
[2] The information processing device according to [1], in which
   the history information includes operation information regarding a user's operation on the image-capturing device.
[3] The information processing device according to [1] or [2], in which
   the history information includes setting information regarding setting of the image-capturing device.
[4] The information processing device according to any one of [1] to [3], in which
   the history information includes sensor information obtained by a sensor.
[5] The information processing device according to [4], in which
   the sensor information includes environment information regarding an environment around the image-capturing device.
[6] The information processing device according to [4] or [5], in which
   the sensor information includes image information obtained by a solid-state imaging element included in the image-capturing device.
[7] The information processing device according to any one of [4] to [6], in which
   the sensor information includes location information indicating a location where the image-capturing device exists.
[8] The information processing device according to any one of [1] to [7], in which
   the product attribute information includes provision form information indicating a form of provision of the product.
[9] The information processing device according to any one of [1] to [8], in which
   the product attribute information includes broadcast form information indicating a broadcast form of the product.
[10] The information processing device according to any one of [1] to [9], in which
   the product attribute information includes program information indicating a type of a program that is the product.
[11] The information processing device according to any one of [1] to [10], in which
   the product attribute information includes event information indicating a type of an event.
[12] The information processing device according to any one of [1] to [11], in which
   the utilization information includes statistical information of the association information based on an attribute of the product.
[13] The information processing device according to any one of [1] to [12], in which
   the information processing device generates the association information.
[14] The information processing device according to any one of [1] to [13], in which
   the product attribute information is generated on the basis of the history information.
[15] The information processing device according to any one of [1] to [14], in which
   a type of the product attribute information and a type of the history information used to generate the product attribute information are associated with each other.
[16] The information processing device according to any one of [1] to [15], in which
   the utilization information is generated by analyzing a plurality of pieces of the association information generated for each of a plurality of pieces of the content.
[17] The information processing device according to [16], in which
   the plurality of pieces of content is shot by a plurality of the image-capturing devices.
[18] The information processing device according to any one of [1] to [17], in which
   the utilization information is generated for every hierarchy of an attribute of the product.
[19] The information processing device according to any one of [1] to [18], in which
   the content-related history information includes specific operation-related information regarding a specific operation on the image-capturing device by the user.
[20] The information processing device according to any one of [1] to [19], in which
   the content-related history information is information selected from the history information on the basis of time information.
[21] The information processing device according to any one of [1] to [20], in which
   the information processing device generates setting update information used for setting of the image-capturing device on the basis of the utilization information.
[22] An image-capturing device that generates association information in which content-related history information, which is history information indicating a history of an image-capturing device and is related to content captured by the image-capturing device for production of a product, and product attribute information indicating an attribute of the product are associated with each other.
[23] An information processing method in which utilization information indicating a utilization status of an image-capturing device by a user in accordance with an attribute of a product is generated on the basis of association information in which content-related history information, which is history information indicating a history of an image-capturing device and is related to content captured by the image-capturing device for production of the product, and product attribute information indicating an attribute of the product are associated with each other.

### REFERENCE SIGNS LIST

- 1: Utilization information generation unit
- 2: Storage unit
- 3: Communication unit
- 4: Control unit
- 5: Association information generation unit
- 6: Attribute information generation unit
- 7: Setting update information generation unit
- 8: Operation unit
- 9: Sensor
- 10: Information processing device
- 20: Image-capturing device
- 30: Information communication network
- S1: Generating utilization information

## Claims

1. An information processing device that generates utilization information indicating a utilization status of an image-capturing device by a user in accordance with an attribute of a product, on a basis of association information in which content-related history information, which is history information indicating a history related to an image-capturing device and is related to content shot by the image-capturing device for production of the product, and product attribute information indicating an attribute of the product are associated with each other.

2. The information processing device according to claim 1, wherein
the history information includes operation information regarding a user's operation on the image-capturing device.

3. The information processing device according to claim 1, wherein
the history information includes sensor information obtained by a sensor.

4. The information processing device according to claim 3, wherein
the sensor information includes environment information regarding an environment around the image-capturing device.

5. The information processing device according to claim 3, wherein
the sensor information includes image information obtained by a solid-state imaging element included in the image-capturing device.

6. The information processing device according to claim 3, wherein
the sensor information includes location information indicating a location where the image-capturing device exists.

7. The information processing device according to claim 1, wherein
the product attribute information includes provision form information indicating a form of provision of the product.

8. The information processing device according to claim 1, wherein
the product attribute information includes program information indicating a type of a program that is the product.

9. The information processing device according to claim 1, wherein
the utilization information includes statistical information of the association information based on an attribute of the product.

10. The information processing device according to claim 1, wherein
the information processing device generates the association information.

11. The information processing device according to claim 1, wherein
the product attribute information is generated on a basis of the history information.

12. The information processing device according to claim 1, wherein
a type of the product attribute information and a type of the history information used to generate the product attribute information are associated with each other.

13. The information processing device according to claim 1, wherein
the utilization information is generated by analyzing a plurality of pieces of the association information generated for each of a plurality of pieces of the content.

14. The information processing device according to claim 13, wherein
the plurality of pieces of content is shot by a plurality of the image-capturing devices.

15. The information processing device according to claim 1, wherein
the utilization information is generated for every hierarchy of an attribute of the product.

16. The information processing device according to claim 1, wherein
the content-related history information includes specific operation-related information regarding a specific operation on the image-capturing device by the user.

17. The information processing device according to claim 1, wherein
the content-related history information is information selected from the history information on a basis of time information.

18. The information processing device according to claim 1, wherein
the information processing device generates setting update information used for setting of the image-capturing device on a basis of the utilization information.

19. An image-capturing device that generates association information in which content-related history information, which is history information indicating a history of an image-capturing device and is related to content captured by the image-capturing device for production of a product, and product attribute information indicating an attribute of the product are associated with each other.

20. An information processing method, wherein utilization information indicating a utilization status of an image-capturing device by a user in accordance with an attribute of a product is generated on a basis of association information in which content-related history information, which is history information indicating a history of an image-capturing device and is related to content captured by the image-capturing device for production of the product, and product attribute information indicating an attribute of the product are associated with each other.
